# EUROPÄISCHE PATENTSCHRIFT

(11) **EP 1 991 995 B1**
(45) Veröffentlichungstag und Bekanntmachung des Hinweises auf die Patenterteilung: **29.06.2016**
(21) Anmeldenummer: 07704611.8
(22) Anmeldetag: 16.02.2007
(51) Int. Cl.: H01F 27/32, H01F 27/36, H01F 27/04

(54) **ELEKTRISCHE ABSCHIRMANORDNUNG**
ELECTRICAL SHIELDING ARRANGEMENT
SYSTÈME DE BLINDAGE ÉLECTRIQUE

(30) Priorität: 21.02.2006 DE 102006008922
(43) Veröffentlichungstag der Anmeldung: 19.11.2008
(73) Patentinhaber: Siemens Aktiengesellschaft, 80333 München (DE)
(72) Erfinder: HOPPE, Jens, 90592 Schwarzenbruck (DE); HEINZIG, Peter, 90530 Wendelstein (DE); JAHNEL, Dietmar, 53842 Troisdorf (DE); SCHUMMER, Lambert, 90449 Nürnberg (DE)
(86) Internationale Anmeldenummer: PCT/EP2007/051488
(87) Internationale Veröffentlichungsnummer: WO 2007/096299

(56) Entgegenhaltungen:
- EP-A- 1 487 074
- EP-A1- 0 285 895
- EP-A1- 0 688 075
- DE-A1- 2 205 035

## Beschreibung

Die Erfindung betrifft eine elektrische Abschirmungsanordnung einer Hochspannungsleitung mit einem ersten Kopplungselement und mindestens einem zweiten korrespondierenden Kopplungselement, wobei die Kopplungselemente ineinander verschiebbar sind und jeweils eine rohrförmige Steuerelektrode um eine Leitungsdurchführung aufweist, sowie die rohrförmigen Steuerelektroden von jeweils mindestens einer rohrförmigen isolierenden Barriere umhüllt und mit dieser verbunden sind.

Gleichzeitig ist Gegenstand der vorliegenden Erfindung ein Kopplungselement für eine elektrische Abschirmungsanordnung für eine Hochspannungsleitung mit einer rohrförmigen Steuerelektrode und einer rohrförmigen isolierenden Barriere.

Die elektrische Verbindung von elektrischen Anlagen, insbesondere Hochspannungsanlagen, erfordert einen hohen technischen Aufwand für die elektrische Abschirmung der zu- und abführenden Spannungsleitungen. Insbesondere bei Ausleitungen und Durchführungen zu elektrischen Anlagen muss eine elektrische Abschirmung jederzeit und über die gesamte Leitungsführung gegeben sein. Insbesondere in Fällen, in denen die elektrische Anlage ein in Öl gefüllter Transformator beziehungsweise eine Drosselspule für hohe Betriebsspannungen ist, ist die Leitungsführung in einem geerdeten und Ölenthaltenden Dom der entsprechenden elektrischen Anlage angeordnet.

Vor allem für hohe Gleichspannungen, wie sie bei Hochspannungsgleichstromübertragungen (HGÜ)auftreten, ist eine elektrische Abschirmung der Leitungsdurchführung unerlässlich. Falls ein Längenausgleich zwischen zwei Anschlussstücken notwendig ist können sich in den Durchleitungen dieser elektrischen Anlagen so genannte Trennstellen befinden, die aus zwei verschiebbaren, mit Papier isolierten Steuerelektroden bestehen. Zusätzlich sind diese Trennstellen vorzugsweise mit einem die Steuerelektrode umschließenden Barrierensystem ausgestattet, in dem eine Isolationsflüssigkeit, insbesondere ein Öl, zirkuliert und damit die isolierende abschirmende Wirkung unterstützt.

Derzeit sind Trennstellen bekannt, bei denen die entsprechenden Steuerelektroden ineinander verschiebbar sind. Problematisch ist hierbei jedoch, dass die Barrieren derart ausgestaltet sind, dass zusätzliche Elemente an den Barrieren zur Arretierung integriert sind. Insbesondere keilförmige Verdickungen und ähnliche geometrische Elemente sind den elektrischen Erfordernissen angepasst und dienen gleichzeitig zu einer Verkeilung des zumeist zweiteiligen Barrierensystems über die Trennstelle hinweg. Des Weiteren ist herkömmlicherweise ein erstes Kopplungsstück der Trennstelle mit einem geringeren Durchmesser ausgestattet als das korrespondierende zweite Kopplungselement. Durch die veränderten Durchmesser in Verbindung mit direkt auf der Steuerelektrode befindlichen Zusatzelementen des Barrierensystems wird eine Verkeilung der ineinander geschobenen Kopplungselemente erreicht. Problematisch ist jedoch, dass die Arretierung der Kopplungselemente nur in genau einer Position erfolgt, so dass die Kopplungselemente bezüglich des Arretierungspunktes gegeneinander genau abgestimmt sein müssen. Eine Kompensation von axialen Über- oder Unterlängen der Leitungen ist über die Kopplungselemente in der Trennstelle mit der herkömmlichen Technologie deshalb nur bedingt möglich nicht möglich.

So beschreibt die DE 690 24 335 T2 eine Buchse für hohe Gleichspannungen. Gemäß der dortigen Erfindung wird mittels eines um die Trennstelle angeordneten Kondensatorkörpers eine kapazitive Steuerung des elektrischen Feldes erreicht. Dabei ist in Abhängigkeit der ineinander angeordneten Radien des Kondensatorkörpers eine Lage in axialer Richtung bezogen auf die Leitungsdurchführung definiert, die als eine Art gerader nach außen gerichteter Kegelstumpf ausgebildet ist.

Des Weiteren offenbart die DE 690 12 258 T2 eine Kondensatorinnenwand zur Feldsteuerung der Leitungsverbindung einer Transformatordurchführung. Gemäß der dortigen Erfindung verhindert die Kondensatorisolierwand einen Überschlag der elektrischen Spannung, in dem diese Barriere zur kapazitiven sowie resistiven Steuerung des elektrischen Feldes geeignet und so bemessen ist, dass die auftretenden Spannungen und Feldstärken in dem jeweiligen Bereich nicht zu einer Zerstörung der Barrieren führen.

Des Weiteren offenbart die EP 0 169 922 B1 ein Isolierelement für Hochspannungsgeräte. Gemäß der dortigen Erfindung wird ein Isolierzylinder in einem Überlappungsbereich bezüglich seiner Wandstärke verringert und angeschrägt, so dass ein hierzu korrespondierender Isolierzylinder im Überlappungsbereich mit entsprechend Verringerung der Wandstärke und Anschrägung im Überlappungsbereich benutzt wird.

Des Weiteren offenbart die EP 1 487 074 A eine elektrische Abschirmungsanordnung gemäß dem Oberbegriff von Anspruch 1.

Nachteilig bei allen Lösungen im Stand der Technik ist, dass eine mechanische Verspannung der Barrieren ineinander kein oder nur geringe Toleranzen bezüglich des Arretierungspunktes der Kopplungselemente gegeneinander zulässt. Aufgrund der Position der Verkantungselemente im Barrierensystem beziehungsweise aufgrund der Anschrägungen von korrespondierenden Barrieren ist es nicht möglich, den axialen Abstand zwischen den Barrieren und damit auch der Steuerelektroden in einem gewissen Bereich frei zu wählen. Dies ist jedoch notwendig, wenn beim nachträglichen Anschluss zweier Leitungen hier keine vollständige Passgenauigkeit gegeben ist und insofern diese Trennstelle ebenfalls zur Kompensation der entsprechenden um die Trennstelle angeordneten Abschirmungselemente dient.

Aufgabe der vorliegenden Erfindung ist es daher, die oben genannten Nachteile im Stand der Technik zu vermeiden und eine Abschirmung bereitzustellen, die schnell und einfach herstellbar ist, sowie eine große Toleranz bezüglich der Kopplungselemente relativ zueinander gewährleistet. Dabei sollten die beiden Leitungsführungen steckbar sein.

Gelöst wird die Aufgabe durch die kennzeichnenden Merkmale des Patentanspruchs 1. Erfindungsgemäß ist vorgesehen, dass in einem Überlappungsbereich zumindest eine rohrförmige isolierende Barriere nicht mit der jeweiligen Steuerelektrode mechanisch verbunden ist und die rohrförmige Steuerelektrode sowie die rohrförmige isolierende Barriere einen veränderten Durchmesser gegenüber dem Durchmesser außerhalb des Überlappungsbereiches aufweisen, wobei die Durchmesser der rohrförmigen isolierenden Barrieren beider Kopplungselemente derart aufeinander abgestimmt sind, dass die rohrförmigen isolierenden Barrieren sich beim Ineinanderschieben überlappen und mechanisch gegenseitig verspannen. Durch die Entkopplung mindestens einer Barriere von der Steuerelektrode eines Kopplungselements im Überlappungsbereich kann mittels der Barriere eine mechanische Festigkeit unter Berücksichtigung der Isolationseigenschaften gewährleistet werden. Gleichzeitig ist es hierdurch möglich, dass im Außenbereich der jeweiligen Abschirmungsanordnungen die zugrunde liegenden Durchmesser der Leitungsführung, der Steuerelektroden sowie der Barrieren gleich bleiben können, und in sofern der Aufwand für die Herstellung von Steuerelektroden und dies umhüllenden Barrieren mit unterschiedlichen Durchmessern entfällt. Weiterhin ist hierdurch gewährleistet, dass bei einer Zirkulation eines Zirkulationsmediums zwischen der Barriere und der rohrförmigen Steuerelektrode das Isolationsmedium hier als zusätzliche Isolation sowie zur elektrischen Feldführung genutzt wird. Ziel der erfindungsgemäßen Abschirmanordnung ist eine resistive Steuerung des elektrischen Gleichspannungsfeldes durch die Form der Elektroden, die Form und die Stärke des Isolationsmaterials, sowie die Anordnung und die Dicke der Barrieren zu erzielen, die die elektrischen Dimensionierungsparameter, wie maximale Gleichspannungsfeldstärken und zulässige elektrische Tangentialfeldstärken erfüllen.

Rohrförmig im Sinne der Erfindung bedeutet, dass die so entsprechend benannten Elemente eine Längserstreckung aufweisen und über einen nahezu kreisförmigen Querschnitt ausgebildet sind. Hierbei muss das jeweils so benannte Element jedoch nicht vollständig als eine Art Rohr ausgebildet sein, sondern kann auch segmentweise Aussparungen und Teilöffnungen aufweisen. Die Definition "kreisförmig" umschließt auch hiervon abweichende Querschnitte, wie z. B. elliptische, dreieckige oder mehreckige Strukturen.

Die Anzahl der Kopplungselemente an einer Trennstelle ist nicht begrenzt. So können auch drei oder vier Kopplungselemente jeweils zu einer Verbindungsstelle kombiniert werden. Die hierbei notwendigen Anpassungen der Barrieren und Steuerelektroden für ein korrespondierendes Ineinanderschieben und Verspannen in einer viergliedrigen Abschirmungsanordnung sind dann mittels geeigneter Zusatzelemente, wie z.B. L-förmige Elemente auf den Barrieren und Steuerelektroden für jeweils rechtwinklig zueinander angeordnete Kopplungselemente, möglich.

In einer vorteilhaften Ausgestaltung sind die rohrförmigen isolierenden Barrieren im Überlappungsbereich nahezu parallel zur Verschiebungsrichtung der Kopplungselemente im Bezug auf die Leitungsführung ausgebildet. Hierdurch ist gewährleistet, dass beim Ineinanderschieben der Kopplungselemente ineinander die parallel zur Leitungsführung verlaufenden, ineinander geschobenen Barrieren gleichzeitig ineinander geschoben und gegeneinander verspannbar sind.

Vorteilhafterweise sind die rohrförmigen isolierenden Barrieren im Überlappungsbereich ausgebildet. Die stufenförmige Ausbildung der Barrieren im Überlappungsbereich gewährleistet, dass zum einen eine große mechanische Stabilität bezüglich der außerhalb des Überlappungsbereichs liegenden Barrieren gegeben ist. Gleichzeitig ist hierdurch eine parallele Ausrichtung des Endbereiches der Barrieren im Überlappungsbereich gegeben.

Vorteilhafterweise besteht die rohrförmigen isolierenden Barrieren zumindest teilweise aus Pressspan.

Erfindungsgemäß sind die rohrförmigen isolierenden Barrieren der jeweiligen Kopplungselemente im Überlappungsbereich als Barrierensystem ausgebildet, wobei die einzelnen Barrieren der Kopplungselemente sich zumindest teilweise überlappen und/oder mechanisch gegeneinander verspannen, sowie innerhalb des Barrierensystems eine Isolierflüssigkeit, insbesondere ein Öl, zirkulierbar ist. Hierdurch ist gewährleistet, dass mittels eines mehrstufigen Barrierensystems die Feldführung auch in den leitungsentfernten Bereichen gewährleistet ist. Insbesondere durch die Verwendung von Pressspan und der entsprechenden teilweisen Überlappung der einzelnen Komponenten des Barrierensystems gegeneinander ist gewährleistet, dass innerhalb der so gebildeten Kanäle die Strömung der Isolierflüssigkeit, insbesondere eines Isolationsöls, gewährleistet bleibt.

Vorteilhafterweise weist die Steuerelektrode eine Isolation, vorzugsweise aus Papier, auf, wobei die Isolation insbesondere zwischen der rohrförmigen Steuerelektrode und der jeweiligen rohrförmigen isolierenden Barriere angeordnet ist.

In einer vorteilhaften Ausgestaltung überlappen sich die ineinander geschobenen rohrförmigen isolierenden Barrieren der Kopplungselemente von bis zu 500 mm, vorzugsweise 10 mm. Insbesondere bei HGÜ-Anwendungen ist ein großer Überlappungsbereich für die elektrische resistive Feldführung von Vorteil.

Bei einem beispielhaften Koppelungselement ist vorgesehen, dass in einem Kopplungsbereich des Kopplungselementes die rohrförmige isolierende Barriere nicht mit der rohrförmigen Steuerelektrode verbunden ist und einen verringerten Durchmesser gegenüber dem Durchmesser außerhalb des Kopplungsbereiches aufweist. Durch diese Maßnahmen ist gewährleistet, dass keine unterschiedlichen Rohrdurchmesser für die Steuerelektroden beziehungsweise die Barrieren notwendig sind. Gleichzeitig ist hierdurch eine Möglichkeit gegeben, die Barriere als mechanisches Kopplungselement in Verbindung mit den Isolationseigenschaften zu verbinden.

Der Kopplungsbereich eines beispielhaften Koppelungselements ist kleiner als der Überlappungsbereich der Abschirmanordnung, wobei in erster Nährung der Kopplungsbereich ungefähr halb so lang wie der Überlappungsbereich ist.

Weiterhin ist beispielhaft vorgesehen, dass die rohrförmige isolierende Barriere im Kopplungsbereich eine mechanische Festigkeit besitzt und/oder zumindest teilweise aus Pressspan besteht.

Das Kopplungselement ist beispielhaft so ausgebildet, dass die rohrförmige Steuerelektrode und/oder die rohrförmige isolierende Barriere stufenförmig ausgebildet, sowie insbesondere parallel zur Längserstreckung der Leitungsdurchführung ausgerichtet sind.

Beispielhaft ist vorgesehen, dass die rohrförmige isolierende Barriere als ein zumindest im Kopplungsbereich umgebendes Barrierensystem ausgebildet ist. In einer beispielhaften Ausgestaltung ist die rohrförmige isolierende Barriere zumindest im Kopplungsbereich in Längsrichtung mechanisch verstärkt. Die Verstärkung kann durch Umwicklung der isolierenden Barriere im Kopplungsbereich mittels eines Festigungsbandes sowie durch Auftragen zusätzlicher Materialien und/oder durch eine Imprägnierung mittels eines Harzes erfolgen.

In einer beispielhaften Ausgestaltung weist die rohrförmige Steuerelektrode und die rohrförmige isolierende Barriere im Kopplungsbereich einen verringerten Durchmesser gegenüber dem Durchmesser im Außenbereich auf, wobei der Durchmesser der rohrförmigen isolierenden Barriere im Kopplungsbereich größer ist als der Durchmesser der rohrförmigen Steuerelektrode. Dadurch ist gewährleistet, dass die Barriere bezogen auf die Leitungsdurchführung die Steuerelektrode umgibt.

Weitere vorteilhafte Ausgestaltungen ergeben sich aus den Unteransprüchen. Einige beispielhafte Ausgestaltungen werden anhand der Figuren erläutert. Es zeigen:
- Fig.1: schematische Seitenansicht der erfindungsgemäßen elektrischen Abschirmungsanordnung;
- Fig.2a,2b: schematische Ansicht der erfindungsgemäßen elektrischen Abschirmungsanordnungen für zwei Zustände während des Ineinanderschiebens der Kopplungselemente;
- Fig.3: schematische Ansicht einer erfindungsgemäßen elektrischen Abschirmungsanordnung als Trennstelle zwischen zwei Wicklungen.

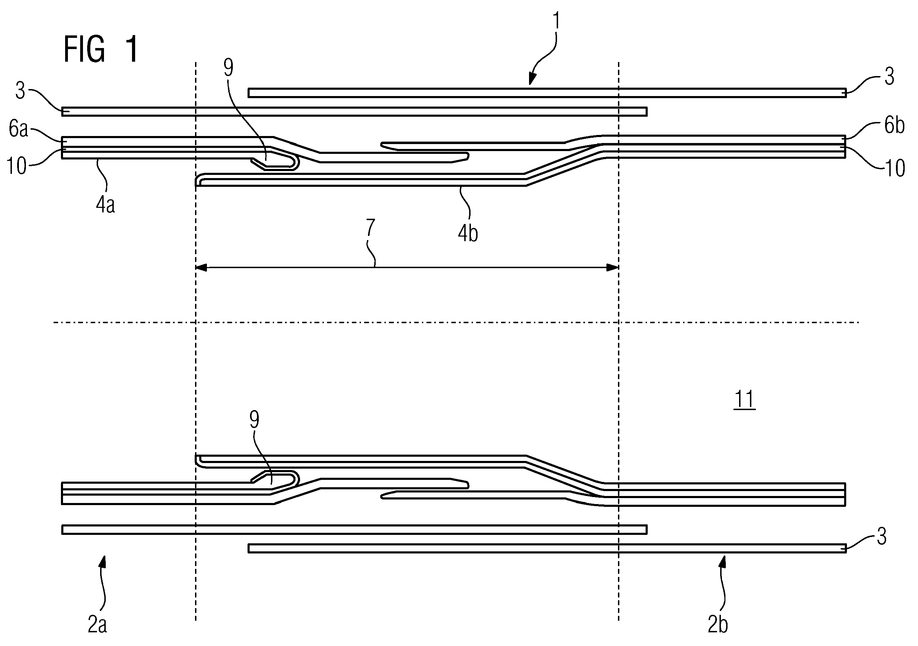

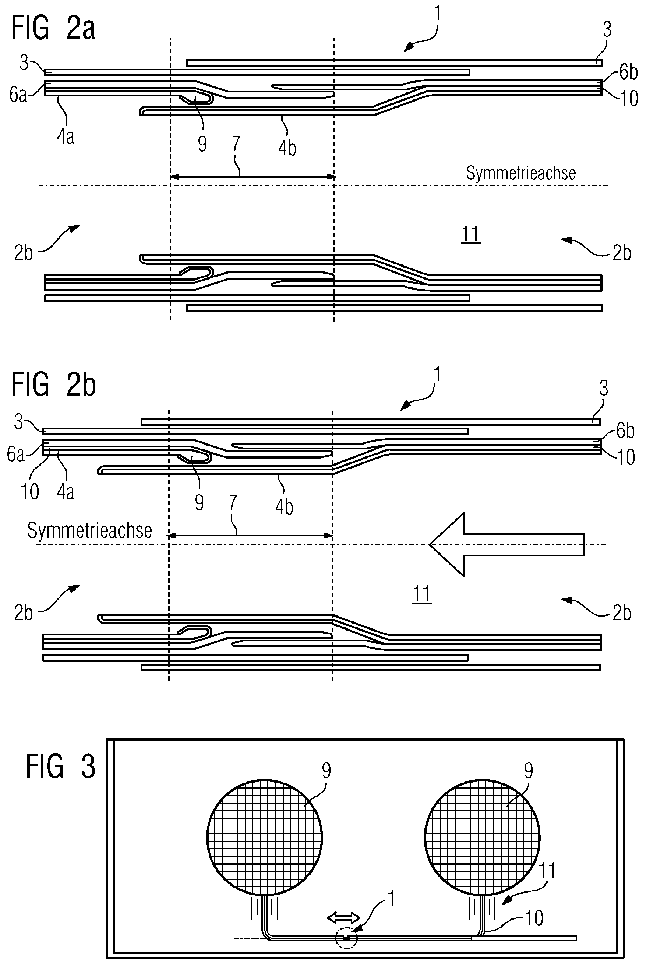

Die Figur Fig. 1 zeigt eine erfindungsgemäße elektrische Abschirmungsanordnung 1, bei der die Kopplungselemente 2a, 2b ineinander geschoben sind. Die Steuerelektrode 4a des ersten Kopplungselementes 2a weist einen geringen radialen Abstand gegenüber der Steuerelektrode 4b des zweiten Kopplungselementes 2b auf. Die Steuerelektroden 4a, 4b weisen eine Isolationsschicht 10 auf. sind Im Überlappungsbereich weisen beide isolierenden Barrieren 6a, 6b einen anderen Durchmesser als die Steuerelektroden 4a, 4b auf. Gleichzeitig ist zumindest eine Steuerelektrode 4a nicht mit der zugeordneten Barriere 6a mechanisch verbunden. Hierdurch ergibt sich der Vorteil, dass die rohrförmige Barriere 6a im Überlappungsbereich 7 neben den Isolations- beziehungsweise Steuerungseigenschaften des elektrischen Feldes auch zur mechanischen Verspannung der jeweiligen Kopplungselemente 2a, 2b dient. Die Leitungsdurchführung 11 befindet sich in der Mitte der Zeichnung. Die schematische Seitenansicht stellt eine rotationssymmetrische Darstellung der erfindungsgemäßen Abschirmanordnung 1 dar. Die rohrförmige Steuerelektrode 4a und/oder die rohrförmige isolierende Barriere 6a kann hiervon abweichend auch Aussparungen und Teilöffnungen aufweisen, so dass keine vollständige Rotationssymmetrie der Zeichnung Fig. 1, sowie den nachfolgenden Figuren Fig. 2a und 2b gegeben sein kann.

In den Figur Fig. 2a und 2b sind zwei unterschiedliche Verspannungszustände der Abschirmanordnung 1 gezeigt. Im oberen Bild als Figur Fig. 2a ist dargestellt, dass der Überlappungsbereich 7 der Barrieren 3, 6a, 6b sowie der Steuerelektroden 4a, 4b klein ist. Mit Ineinanderschieben der Kopplungselemente 2a, 2b gemäß Figur Fig. 2b ist weiterhin eine elektrische Abschirmung der Abschirmungsanordnung 1 im Überlappungsbereich 7 gewährleistet und gleichzeitig in axialer Richtung die Möglichkeit eines Ausgleiches gegeben. In beiden dargestellten Zuständen ist jedoch schon eine mechanische Verspannung und elektrische Abschirmung der erfindungsgemäßen Abschirmanordnung 1 gewährleistet. Die Kopplungselemente 2a, 2b können dabei durch äußere Fixierungen (nicht dargestellt) gegeneinander zusätzlich fixiert sein.

Die Figur Fig. 3 zeigt die erfindungsgemäße elektrische Abschirmungsanordnung 1 als Trennstelle zwischen zwei Wicklungen 9 eines Transformators, insbesondere eines HGÜ-Transformators. Durch die Möglichkeit einer axialen Kompensation der Über- bzw. Unterlängen der Leitungen 10 entlang der Leitungsführung ist die Möglichkeit gegeben, die Ausleitungen aus den entsprechenden Wicklungen 9 genau aufeinander abzustimmen. Eine entsprechende Nachbehandlung und exakte Aufeinanderabstimmung der Kopplungselemente 2a, 2b aufeinander im Überlappungsbereich ist daher nicht notwendig.

Vorteilhaft ist dabei ebenfalls, dass die Steuerelektroden 4a, 4b an der Trennstelle einen verringerten Isolationsauftrag aus Papier benötigen. Hierdurch wird erreicht, dass ein geringeres Gleichspannungsfeld im Papier des Trennstellenbereiches auftritt und die zulässigen elektrischen Auslegungsparameter eingehalten werden. Der Aufwand der Fertigung verringert sich, da entsprechend geometrische Zusatzelemente zur Verspannung wegfallen, die gleichzeitig keine Variabilität bezüglich des axialen Ausgleichs der Kopplungselemente 2a, 2b gegeneinander erlauben. Die erste Barriere 6a ist auf der jeweiligen rohrförmigen Steuerelektrode 4a fixiert. Ein entsprechendes Barrierensystem 3, 6a, 6b kann ein Gleichspannungsfeld führen.

## Patentansprüche

1. Elektrische Abschirmungsanordnung (1) einer Hochspannungsleitung mit einem ersten Kopplungselement (2a) und mindestens einem zweiten korrespondierenden Kopplungselement (2b), wobei die Kopplungselemente (2a, 2b) ineinander verschiebbar sind und jeweils eine rohrförmige Steuerelektrode (4a, 4b) um eine Leitungsdurchführung (11) aufweisen, sowie die rohrförmigen Steuerelektroden(4a, 4b) von jeweils mindestens einer rohrförmigen isolierenden Barriere (6a, 6b) umhüllt und mit dieser verbunden sind, wobei in einem Überlappungsbereich (7) mindestens eine der rohrförmigen isolierenden Barrieren (6a) nicht mit der jeweiligen Steuerelektrode (4a) verbunden ist und die rohrförmige Steuerelektrode (4a) sowie die rohrförmige isolierende Barriere (6a) einen veränderten Durchmesser aufweisen, wobei die Durchmesser der rohrförmigen isolierenden Barrieren (6a, 6b) beider Kopplungselemente (2a, 2b) derart aufeinander abgestimmt sind, dass die rohrförmigen isolierenden Barrieren (6a, 6b) sich beim ineinander schieben überlappen und mechanisch gegeneinander verspannen,
**dadurch gekennzeichnet, dass**
die rohrförmigen isolierenden Barrieren (6a, 6b) zusammen mit weiteren Barrieren (3) als den Überlappungsbereich (7) umgebendes Barrierensystem (3, 6a, 6b) ausgebildet sind, wobei die einzelnen Barrieren (3, 6a, 6b) der Kopplungselemente (2a, 2b) sich zumindest teilweise überlappen und sich zumindest teilweise mechanisch gegeneinander verspannen sowie innerhalb des Barrierensystems (3, 6a, 6b) eine Isolationsflüssigkeit, insbesondere ein Öl, zirkulierbar ist.

2. Elektrische Abschirmungsanordnung (1) nach Anspruch 1,
**dadurch gekennzeichnet, dass**
die rohrförmigen isolierenden Barrieren (6a, 6b) im Überlappungsbereich (7) nahezu parallel zur Verschiebungsrichtung der Kopplungselemente (2a, 2b) im Bezug auf die Leitungsdurchführung (11) ausgebildet sind.

3. Elektrische Abschirmungsanordnung (1) nach einem der Ansprüche 1 oder 2,
**dadurch gekennzeichnet, dass**
die rohrförmigen isolierenden Barrieren (6a, 6b) im Überlappungsbereich (7) stufenförmig ausgebildet sind.

4. Elektrische Abschirmungsanordnung (1) nach einem der vorhergehenden Ansprüche,
**dadurch gekennzeichnet, dass**
die rohrförmigen isolierenden Barrieren (6a, 6b) zumindest teilweise aus Pressspan bestehen.

5. Elektrische Abschirmungsanordnung (1) nach einem der vorhergehenden Ansprüche,
**dadurch gekennzeichnet, dass**
die rohrförmige Steuerelektrode (4a) eine Isolation (10), vorzugsweise aus Papier, aufweist, wobei die Isolation (10) insbesondere zwischen der rohrförmigen Steuerelektrode (4a) und der zugeordneten rohrförmigen isolierenden Barriere (6a) angeordnet ist.

6. Elektrische Abschirmungsanordnung (1) nach einem der vorhergehenden Ansprüche,
**dadurch gekennzeichnet, dass**
die ineinander geschobenen, rohrförmig isolierenden Barrieren (3, 6a, 6b) der Kopplungselemente(2a, 2b) sich bis zu 500 mm, vorzugsweise 10 mm, überlappen.

7. Elektrische Abschirmungsanordnung (1) nach einem der vorhergehenden Ansprüche,
**dadurch gekennzeichnet, dass**
die ineinander geschobenen, rohrförmigen Steuerelektroden (4a, 4b) radialen Abstand von bis zu 20mm aufweisen.

## Claims

1. Electrical shielding arrangement (1) of a high-voltage line having a first coupling element (2a) and at least one second corresponding coupling element (2b), wherein the coupling elements (2a, 2b) can be pushed into one another and have in each case a tubular control electrode (4a, 4b) around a line leadthrough (11), and the tubular control electrodes (4a, 4b) are in each case sheathed by at least one tubular insulating barrier (6a, 6b) and are connected to it, wherein at least one of the tubular insulating barriers (6a) is not connected to the respective control electrode (4a) in an area of overlap (7) and the tubular control electrode (4a) and the tubular insulating barrier (6a) have a variable diameter, the diameters of the tubular insulating barriers (6a, 6b) of the two coupling elements (2a, 2b) being matched to one another in such a manner that the tubular insulating barriers (6a, 6b) overlap when they are pushed into one another and mechanically tension one another, **characterized in that** the tubular insulating barriers (6a, 6b) together with further barriers (3) are constructed as barrier system (3, 6a, 6b) surrounding the area of overlap (7), wherein the individual barriers (3, 6a, 6b) of the coupling elements (2a, 2b) at least partially overlap and at least partially mechanically tension one another and an insulation fluid, particularly an oil, can be circulated within the barrier system (3, 6a, 6b).

2. Electrical shielding arrangement (1) according to Claim 1, **characterized in that** the tubular insulating barriers (6a, 6b) are constructed to be almost parallel to the direction of displacement of the coupling elements (2a, 2b) with respect to the line leadthrough (11) in the area of overlap (7).

3. Electrical shielding arrangement (1) according to one of Claims 1 or 2, **characterized in that** the tubular insulating barriers (6a, 6b) are constructed to be stepped in the area of overlap (7).

4. Electrical shielding arrangement (1) according to one of the preceding claims, **characterized in that** the tubular insulating barriers (6a, 6b) consist at least partially of pressboard.

5. Electrical shielding arrangement (1) according to one of the preceding claims, **characterized in that** the tubular control electrode (4a) has an insulation (10), preferably of paper, the insulation (10), in particular, being arranged between the tubular control electrode (4a) and the associated tubular insulating barrier (6a).

6. Electrical shielding arrangement (1) according to one of the preceding claims, **characterized in that** the tubular insulating barriers (3, 6a, 6b), pushed into one another, of the coupling elements (2a, 2b) overlap by up to 500 mm, preferably 10 mm.

7. Electrical shielding arrangement (1) according to one of the preceding claims, **characterized in that** the tubular control electrodes (4a, 4b) pushed into one another have a radial distance of up to 20 mm.

## Revendications

1. Agencement (1) de blindage électrique d'une ligne de haute tension comprenant un premier élément (2a) de couplage et au moins un deuxième élément (2b) de couplage correspondant, les éléments (2a, 2b) de couplage pouvant coulisser les uns dans les autres et ayant respectivement une électrode (4a, 4b) tubulaire de commande autour d'une traversée (11) de ligne, les électrodes (4a, 4b) tubulaires de commande étant entourées par respectivement au moins une barrière (6a, 6b) tubulaire isolante et y étant reliées, dans lequel, dans une région (7) de chevauchement, au moins l'une des barrières (6a) tubulaires isolantes n'est pas reliée à l'électrode (4a) de commande respective et l'électrode (4a) tubulaire de commande ainsi que la barrière (6a) tubulaire isolante ont un diamètre modifié, les diamètres des barrières (6a, 6b) tubulaires isolantes des deux éléments (2a, 2b) de couplage étant adaptés l'un à l'autre de manière à ce que les barrières (6a, 6b) tubulaires isolantes se chevauchent lors du coulissement l'un dans l'autre et soient bloquées mécaniquement l'une par rapport à l'autre,
**caractérisé en ce que** les barrières (6a, 6b) tubulaires isolantes sont constituées ensemble avec d'autres barrières (3) sous la forme d'un système (3, 6a, 6b) de barrières entourant la région (7) de chevauchement, les diverses barrières (3, 6a, 6b) des éléments (2a, 2b) de couplage se chevauchant au moins en partie et étant bloquées mécaniquement l'une par rapport à l'autre au moins en partie, tandis qu'à l'intérieur du système (3, 6a, 6b) de barrières peut circuler un liquide isolant, notamment une huile.

2. Agencement (1) de blindage électrique suivant la revendication 1,
**caractérisé en ce que**
les barrières (6a, 6b) tubulaires isolantes sont, dans la région (7) de chevauchement, presque parallèles à la direction de coulissement des éléments (2a, 2b) de couplage par rapport à la traversée (11) de ligne.

3. Agencement (1) de blindage électrique suivant l'une des revendications 1 ou 2,
**caractérisé en ce que**
les barrières (6a, 6b) tubulaires isolantes sont en forme de gradin dans la région (7) de chevauchement.

4. Agencement (1) de blindage électrique suivant l'une des revendications précédentes,
**caractérisé en ce que**
les barrières (6a, 6b) tubulaires isolantes sont au moins en partie en carton comprimé et lustré.

5. Agencement (1) de blindage électrique suivant l'une des revendications précédentes,
**caractérisé en ce que**
l'électrode (4a) tubulaire de commande a un isolant (10), de préférence en papier, l'isolant (10) étant disposé notamment entre l'électrode (4a) tubulaire de commande et la barrière (6a) tubulaire isolante associée.

6. Agencement (1) de blindage électrique suivant l'une des revendications précédentes,
**caractérisé en ce que**
les barrières (3, 6a, 6b) tubulaires isolantes, qui ont coulissé l'une dans l'autre, des éléments (2a, 2b) de couplage se chevauchent jusqu'à 500 mm, de préférence jusqu'à 10 mm.

7. Agencement (1) de blindage électrique suivant l'une des revendications précédentes,
**caractérisé en ce que**
les électrodes (4a, 4b) tubulaires de commande, qui ont coulissé l'une dans l'autre, ont une distance radiale allant jusqu'à 20 mm.
